(19) Europäisches Patentamt
European Patent Office
Office européen des brevets

(11) **EP 2 417 500 B1**

(12) **EUROPÄISCHE PATENTSCHRIFT**

(45) Veröffentlichungstag und Bekanntmachung des Hinweises auf die Patenterteilung:
**13.11.2019   Patentblatt 2019/46**

(21) Anmeldenummer: **10710317.8**

(22) Anmeldetag: **23.03.2010**

(51) Int Cl.:
**G05B 19/418** (2006.01)   **B64F 1/36** (2017.01)

(86) Internationale Anmeldenummer:
**PCT/EP2010/053767**

(87) Internationale Veröffentlichungsnummer:
**WO 2010/115704 (14.10.2010 Gazette 2010/41)**

(54) **SYSTEM ZUR DEZENTRALEN MATERIALFLUSSSTEUERUNG**

SYSTEM FOR DECENTRALISED MATERIAL FLOW CONTROL

SYSTÈME DE FLUX DE MATÉRIEL DÉCENTRALISÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.04.2009   DE 102009016578**
**30.06.2009   DE 102009031137**

(43) Veröffentlichungstag der Anmeldung:
**15.02.2012   Patentblatt 2012/07**

(73) Patentinhaber: **Siemens Aktiengesellschaft**
**80333 München (DE)**

(72) Erfinder:
• **BAIER, Georg**
**81241 München (DE)**
• **KEUTNER, Konstantin**
**85579 Neubiberg (DE)**

(56) Entgegenhaltungen:
EP-A1- 1 316 504          EP-A1- 1 510 479
WO-A2-2006/134007         US-A- 5 625 559
US-A1- 2007 078 531

• FUJII S ET AL: "Distributed Simulation Model For Computer Integrated Manufacturing" PROCEEDINGS OF THE WINTER SIMULATION CONFERENCE (WSC). LAKE BUENA VISTA, DEC. 11 - 14, 1994; [PROCEEDINGS OF THE WINTER SIMULATION CONFERENCE (WSC)], NEW YORK, IEEE, US, 11. Dezember 1994 (1994-12-11), Seiten 946-953, XP010305950 ISBN: 978-0-7803-2109-0

**Beschreibung**

Die Erfindung betrifft ein Materialflusssystem zur Beförderung von Transportgütern, umfassend Komponenten zur Durchführung einer Transportaufgabe. Weiterhin betrifft die Erfindung eine Komponente eines Materialflusssystems zur Beförderung von Gütern.

Materialflusssysteme sollen möglichst den optimalen Durchsatz für die zu befördernden Transportgüter erreichen. Dazu müssen Materialflussentscheidungen, wie z.B. die Stellungen von Weichen, oder ob neue Transportgüter eingelastet werden, so getroffen werden, dass es nicht zu Schieflasten oder Staus kommt. Dazu kann der aktuelle Belegungszustand der Anlage sowie, falls vorhanden, Informationen über die geplanten einzulastenden Transportgüter für eine Prognose verwendet werden, an welchen Bereichen der Anlage Staus etc. zu erwarten sind. Dann kann mit geeigneten Steuerungsstrategien dem entgegengewirkt werden.

In Systemen mit einem zentralen Materialflussrechner (MFR) verwaltet dieser den aktuellen Belegungszustand zentral und kann damit auch zentral eine Prognose über zukünftige Zustände berechnen. Bei Vorhandensein eines Plans über anstehende einzulastende Transportgüter, können diese bei der Berechnung ebenfalls berücksichtigt werden. Die klassischen zentralen Materialflusssysteme verfügen über eine zentrale Instanz, den Materialflussrechner, welche wie oben ausgeführt alle notwendigen Informationen periodisch von den untergelagerten Steuerungen bekommt und so die zukünftige Belegung prognostizieren kann. In der US Patentanmeldung US2007/0078531A1 sind ein System und eine Methode zur dynamischen Simulation von Prozessflüssen offenbart, wobei eine zentrale Simulationsmaschine (Simulation Engine) verwendet wird. Zentrale Materialflussrechner (MFR) stellen einen Flaschenhals dar, der die Performance und den Durchsatz des Materialflusssystems beeinträchtigen kann. Bei Ausfall des zentralen Materialflussrechners kann sich das gesamte Materialflusssystem nicht mehr an veränderte Lastbedingungen anpassen.

In der Literatur gibt es Ansätze für dezentrale Materialflusssysteme. Dezentrale Materialflusssysteme können eine zentrale Instanz als Informationsdrehscheibe (z.B. passiv über ein elektronisches Blackboard, oder aktiv ähnlich einem klassischen MFR) einführen. Damit gehen aber die Vorteile des dezentralen Ansatzes (kein zentraler Flaschenhals für die Performance, kein Single-Point-of-Failure, gemeinsame Grenzen von Mechatronik und Steuerung) wieder verloren. Weiterhin schlagen A. Fay und I. Fischer im Artikel "Dezentrale Automatisierungsstrategien für Gepäckbeförderungssysteme" in at - Automatisierungstechnik 52 (2004) 7, Oldenbourg Verlag vor, für Materialflusssysteme Routing-Mechanismen des Internets zu verwenden. Die vorgeschlagenen dezentralen Ansätze sind aber unflexibel und nicht performant. Z.B. erfolgt keine Aktualisierung im Falle von Routenänderungen.

G. Follert und M. Roidl schlagen in "Evaluation of Routing Strategies for Decentralized Self-Organization in Large Scale Conveyor Systems. Progress in Material Handling Research: 2008. Material Handling Institute, 160-184, 2008" einen Ansatz ohne zentrales Element vor. Dies geschieht durch Fluten der Anlage mit Nachrichten. Die entstehende Kommunikationslast ist dabei sehr groß, da für jede eingelastete Transporteinheit eine individuelle Bestimmung der Route durch Fluten des Kommunikationsnetzes der Anlage bestimmt wird.

In der internationalen Patentanmeldung WO 2006/13407 A2 ist ein Fördersystem mit einer Vielzahl von lokalen Materialflusssteuerungen und einem Materialflussmonitor offenbart.

In Fujii S. et al. "Distributed Simulation Model For Computer Integrated Manufacturing" ist eine dezentrale Simulation eines CIM-Systems (Computer Integrated Manufacturing) offenbart, bei dem Fabrikkomponenten (Areas) durch ein Transportsystem verbunden sind.

In der US Patentschrift US5625559ist ein Transportsystem mit verteilten Komponenten und einem zentralen Simulationsrechner offenbart.

Die Aufgabe der vorliegenden Erfindung ist es, die Zuverlässigkeit des Systems zu erhöhen und eine Komponente für ein Materialflusssystem bereitzustellen, die eine sichere Prognose über die zukünftige Entwicklung des Belegungszustandes des Materialflusssystem ermöglicht, wobei die Komponente auf Änderungen im Materialflusssystem flexibel und zeitnah reagiert, ohne dass dazu eine zentrale Instanz wie ein Materialflussrechner notwendig ist.

Die Aufgabe wird mit einem Materialflusssystem zur Beförderung von Transportgütern gemäß Anspruch 1 umfassend Komponenten zur Durchführung einer Transportaufgabe gelöst, wobei eine Komponente umfasst:

a) ein Mechanikelement zur Förderung der Transportgüter;

b) eine Sensorik zum Erfassen von Zuständen des Mechanikelementes und/oder des Transportgutes und/oder der Umgebung;

c) eine Aktorik zur mechanischen Beeinflussung des Mechanikelementes und/oder des Transportgutes;

d) eine Steuerungskomponente zur Ansteuerung des Mechanikelements und der Aktorik, basierend auf den von der Sensorik gelieferten Daten, auf aktuellen Anlagenzustandsdaten des Materialflusssystems und auf Steuerungsparameter der Steuerungskomponente;

e) Schnittstellen zu Nachbarkomponenten und zur Umgebung; und

f) einen, in die Komponente integrierten, dedizierten Eigensimulator aus den Daten der Nachbarsimulatoren, aus einem Einlastplan und einem aktuellen Anlagenzustand durch Simulation einen zukünftigen Anlagenzustand ermittelt.

Dezentrale Materialflusssysteme verfügen nicht über einen zentralen Materialflussrechner (MFR), sondern sind aus kooperierenden autonomen Komponenten bzw. Modulen aufgebaut, die jeweils sowohl Mechatronik als auch die zugehörige Steuerung enthalten und sich weitgehend automatisch konfigurieren können. Module eines solchen Systems sind z.B. Förderbänder, Weichen oder Zusammenführungen. In üblichen dezentrale Materialflusssystemen hat keine der Modulsteuerungen den Gesamtüberblick über das Materialflusssystem, und es können nicht ohne weiteres Prognosen über die zukünftige Entwicklung des Belegungszustandes des Materialflusssystems gemacht werden. Das erfindungsgemäße Verfahren ermöglicht aber den Modulen, d.h. den Komponenten, gemeinsam eine verteilte Prognose über die zukünftige Entwicklung des Belegungszustandes der Gesamtanlage durchzuführen, indem jedes Modul eine Simulation der eigenen zukünftigen Modulzustände mit einem dedizierten (d.h. jeder Komponente zugeordneten) Eigensimulator durchführt. In jede Komponente des Materialflusssystems wird eine dezentrale Simulationskomponente integriert. Innerhalb jeder Komponente (Moduls) steht die vollständige Information zur Verfügung, um die künftige eigene Belegung zu simulieren, da die aktuelle Belegung und das eigene Verhalten bekannt sind. Darüber hinaus müssen zusätzlich Informationen über zukünftig zu befördernde Transporteinheiten von den Vorläufermodulen mitgeteilt werden, und genauso an Nachfolgekomponenten weitergegeben werden. Der genaue Zuschnitt von Modulen in dezentralen Materialflusssystemen ist eine Designentscheidung und nicht Gegenstand dieses Verfahrens. Für das Verfahren ist nur relevant, dass ein Modul (Komponente) eine Entität ist, welche im dezentralen System als abgeschlossene Einheit betrachtet wird und selbst über die Information seines Verhaltens verfügt. Dadurch, dass kein zentraler Materialflussrechner vorhanden ist, wird die Zuverlässigkeit des Systems erhöht. Bei Ausfall einer dezentralen Steuerungskomponente erfolgt kein Totalausfall, da die Aufgaben der ausgefallenen Steuerungskomponente von einer Nachbarkomponente übernommen werden können.

Eine erste vorteilhafte Ausgestaltung der Erfindung liegt darin, dass der Eigensimulator basierend auf den aktuellen Anlagenzustandsdaten des Materialflusssystems und der Steuerungsparameter der Steuerungskomponente durch Simulation eine Prognose für den komponentenspezifischen zukünftigen Zustand bestimmt. Innerhalb jeder Komponente steht somit die vollständige Information zur Verfügung, um die künftige eigene Belegung zu simulieren, da die aktuelle Anlagenbelegung und das eigene Verhalten bekannt sind.

Eine weitere vorteilhafte Ausgestaltung der Erfindung liegt darin, dass der Eigensimulator über die Schnittstellen auf Daten von Nachbarkomponenten zugreifen kann und diese Daten zur Simulation verwendet. Dadurch können Informationen über zukünftig zu befördernde Transporteinheiten von den Vorläuferkomponenten mitgeteilt werden, und genauso an Nachfolgekomponenten weitergegeben werden. Dies erhöht die Effektivität und die Genauigkeit der durch die Simulation erstellten Prognose (Belegung, zu erwartende Staus oder Schieflasten im System).

Eine weitere vorteilhafte Ausgestaltung der Erfindung liegt in einem Steuerungsoptimierer, der basierend auf den durch den Eigensimulator prognostizierten komponentenspezifischen zukünftigen Zustandsdaten, die Steuerungsparameter entsprechend optimiert. Der Steuerungsoptimierer passt auf Grundlage der prognostizierten zukünftigen Anlagenzustände die Steuerungsparameter entsprechend an. Dadurch werden aus den Ergebnissen der Prognose automatisch Steuerungsparameter abgeleitet.

Eine weitere vorteilhafte Ausgestaltung der Erfindung liegt darin, dass die Eigensimulatoren zyklisch synchron für alle Komponenten aktiviert werden. Die Simulation der Komponenten kann zyklisch synchron für alle Komponenten gleichzeitig angestoßen werden. Ein solcher Zyklus kann nach einem festen Zeitraster angestoßen werden, z.B. alle 30s zur vollen und zur halben Minute. Mittels eines geeigneten Protokolls muss sicher gestellt werden, dass alle Komponenten sich auf eine gemeinsame Zeit synchronisieren und den gleichen Zeitplan für die Zyklusstartzeiten verwenden. Ein Beispiel für ein solches Protokoll ist das Internet-Protokoll ntp. Zu Beginn des Zyklus initialisieren sich alle Eigensimulatoren mit den gerade in der Komponente befindlichen Transporteinheiten am aktuellen Aufenthaltsort. Ist die Eigensimulation abgeschlossen, so werden die Daten der gerade neu bestimmten Informationsbasis in der Anlage kommuniziert und ein Zyklus ist abgeschlossen. Es können mehrere Zyklen zusammengeschlossen werden, bevor die neu entstandene Informationsbasis an den Steuerungsoptimierer der Komponenten übergeben wird.

Eine weitere vorteilhafte Ausgestaltung der Erfindung liegt darin, dass die Eigensimulatoren asynchron aktiviert werden. Die Eigensimulatoren der Komponenten können auch asynchron aktiviert werden. Dadurch ist das Verfahren flexibel je nach Anwendungsfall und Materialflusssystem einsetzbar.

Eine weitere vorteilhafte Ausgestaltung der Erfindung liegt darin, dass durch die Eigensimulatoren Schieflasten oder Stauungen im Materialflusssystem erkannt werden. Dadurch kann im Materialflusssystem ein optimaler Durchsatz für die zu befördernden Transportgüter erreicht werden. Materialflussentscheidungen, wie z.B. die Stellungen von Weichen, oder ob neue Transportgüter eingelastet werden, können nun so getroffen werden, dass es nicht zu Schieflasten oder Staus kommt.

Eine weitere vorteilhafte Ausgestaltung der Erfindung liegt darin, dass durch den Steuerungsoptimierer Schieflasten oder Stauungen im Materialflusssystem vermieden werden. Dadurch können Materialflussentscheidungen, wie z.B. die Stellungen von Weichen, oder ob neue Transportgüter eingelastet werden, automatisch und spezifisch getroffen werden, um Schieflasten oder Staus zu vermeiden.

Eine weitere vorteilhafte Ausgestaltung der Erfindung liegt darin, dass der Eigensimulator Zugriff auf einen Einlastplan des Materialflusssystems hat. Dadurch kann für jeden Einlastplan eine zur aktuell vorliegenden Anlagenauslastung und Anlagenkonfiguration abgestimmte Prognose erstellt werden.

Die Aufgabe wird weiterhin gelöst mit einer Komponente eines Materialflusssystems gemäß Anspruch 10, umfassend:

a) eine Mechatronik mit Förderelementen, Sensoren und Aktoren zum Transport der Güter;

b) eine Steuerung zur Ansteuerung der Mechatronik,

c) Schnittstellen zu Nachbarkomponenten und zur Umgebung,

d) einen, in die Komponente integrierten, dedizierten Eigensimulator zur Bestimmung des komponentenspezifizierten zukünftigen Zustandes, wobei der Eigensimulator mit Eigensimulatoren weiterer Komponenten des Materialflusssystems zusammenwirkt, zur Bestimmung des zukünftigen Anlagenzustandes des Materialflusssystems, wobei der Eigensimulator aus den Daten der Nachbarsimulatoren, aus einem Einlastplan und einem aktuellen Anlagenzustand durch Simulation einen zukünftigen Anlagenzustand ermittelt. Eine Komponente bzw. ein Modul besteht aus der Mechanik der Fördertechnik, der Sensorik und Aktorik, der Steuerung, sowie Kommunikationsschnittstellen zu den benachbarten Modulen. Beispiele für Module sind Förderbänder, Weichen oder Zusammenführungen. Komponenten/Module, im Sinne der Erfindung, können auch komplexerer Art sein als die schon aufgeführten Beispiele. Z.B. kann eine Zusammenführung einschließlich der zuführenden Förderbänder zu einem Modul zusammengefasst werden. Der genaue Zuschnitt von Modulen in dezentralen Materialflusssystemen ist eine Designentscheidung abhängig von z.B. infrastrukturellen oder anwendungsspezifischen Voraussetzungen (Requirements). Für das Verfahren ist nur relevant, dass ein Modul eine Entität ist, welche im dezentralen System als abgeschlossene Einheit betrachtet wird und selbst über die Information seines Verhaltens verfügt. In jede Komponente/Modul des Materialflusssystems ist eine dezentrale Simulationskomponente integriert. Innerhalb jedes Moduls steht die vollständige Information zur Verfügung, um die künftige eigene Belegung zu simulieren, da die aktuelle Belegung und das eigene Verhalten bekannt sind. Darüber hinaus müssen zusätzlich Informationen über zukünftig zu befördernde Transporteinheiten von den Vorläufermodulen mitgeteilt werden, und genauso an Nachfolgemodule weitergegeben werden. Bei Ausfall einer dezentralen Simulationskomponente erfolgt kein Totalausfall, da die Aufgaben der ausgefallenen Simulationskomponente von einer Nachbarkomponente übernommen werden können.

Eine weitere vorteilhafte Ausgestaltung der Erfindung liegt darin, dass die Komponente einen Steuerungsoptimierer umfasst, der basierend auf den durch den Eigensimulator prognostizierten komponentenspezifischen zukünftigen Zustandsdaten, die Steuerungsparameter der Steuerung entsprechend anpasst. Dadurch können im Sinne eines Regelkreises automatisch dedizierte Materialflussentscheidungen, wie z.B. die Stellungen von Weichen, oder ob neue Transportgüter eingelastet werden, automatisch und spezifisch getroffen werden, um optimale Belegungszustände zu erreichen.

Eine weitere vorteilhafte Ausgestaltung der Erfindung liegt darin, dass der Steuerungsoptimierer Schieflasten oder Stauungen im Materialflusssystem vermeidet. Dadurch kann im Materialflusssystem ein optimaler Durchsatz für die zu befördernden Transportgüter erreicht werden.

Eine weitere vorteilhafte Ausgestaltung der Erfindung liegt darin, dass der Eigensimulator einer Komponente auf Anlagenzustandsdaten des Materialflusssystems und/oder auf Einlastplandaten Zugriff hat. Dadurch kann für jeden Einlastplan eine zur aktuell vorliegenden Anlagenauslastung und Anlagenkonfiguration abgestimmte Prognose erstellt werden.

Eine weitere vorteilhafte Ausgestaltung der Erfindung liegt darin, dass sich die Komponente mit den Nachbarkomponenten über die Schnittstellen bekannt macht und entsprechend der Anzahl und Art der Nachbarkomponenten den Eigensimulator und den Steuerungsoptimierer automatisch konfiguriert. Dies ermöglicht die Selbstkonfiguration der dezentralen Steuerung. Zur Einstellung werden keine Einlastszenarien benötigt (z.B. im Sinne einer Wissensdatenbank in der hinterlegt ist, wie bei den jeweiligen Einlastszenarien zu verfahren ist).

Ein Ausführungsbeispiel der Erfindung ist in der Zeichnung dargestellt und wird im Folgenden erläutert.

Dabei zeigen:

FIG 1  eine Architektur für den Einsatz eines klassischen zentralen Steuerungsrechners,

FIG 2  eine beispielhafte Architektur für den Einsatz von dezentralen Steuerungskomponenten unter Verwendung von Eigensimulatoren,

FIG 3  den schematischen Aufbau einer erfindungsgemäßen Komponente am Beispiel einer Weiche,

FIG 4    in einem schematischen Übersichtsdiagramm den Unterschied zwischen dem mechatronischen Aufbau einer Anlage und deren Abbildung in erfindungsgemäße Module bzw. Komponenten,

FIG 5    an einem ausgewählten Anlagenszenario den beispielhaften Einsatz der erfindungsgemäßen Eigensimulatoren, und

FIG 6    eine Spezialisierung und Fortführung des Beispiels von FIG 5.

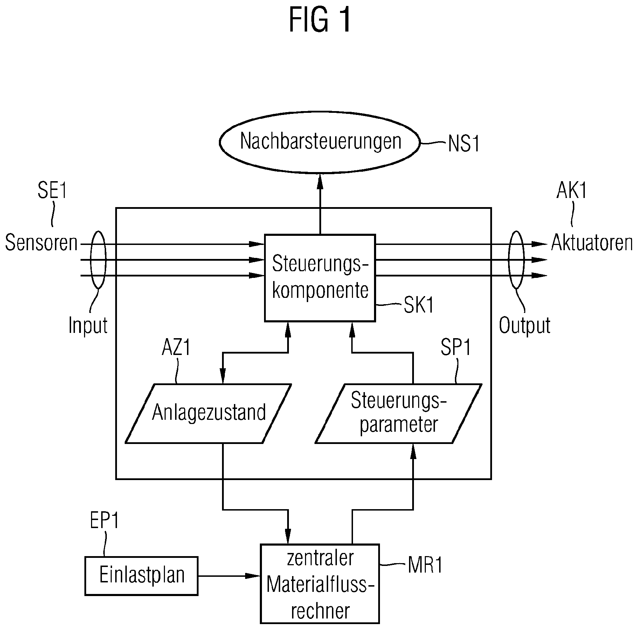

FIG 1 zeigt eine Architektur für den Einsatz eines klassischen zentralen Materialflussrechners MR1 für die Steuerung eines Materialflusssystems (z.B. Transportsystem zur Beförderung und Zustellung von Gütern). Der zentrale Materialflussrechner MR1 wird dabei üblicherweise als Steuerungsrechner und als Verwaltungsrechner (z.B. für eine zentrale Datenspeicherung, für eine zentrale Einlastplanung oder für die Simulation zur Bestimmung von zu erwartenden Anlagezuständen) eingesetzt. Der zentralen Materialflussrechners MR1 kommuniziert mit Steuerungskomponenten SK1 (z.B. Speicherprogrammierbare Steuerung) der Anlage z.B. über Kabelverbindungen oder wireless (WLAN, Bluetooth). Eine Steuerungskomponente SK1 kann auch mit einer oder mehreren Nachbarsteuerungen NS1 verbunden sein und Daten mit diesen austauschen oder Steuerungsbefehle des zentralen Materialflussrechners MR1 weitergeben. Des Weiteren erhält eine Steuerungskomponente SK1 Input durch Sensoren SE1 (Sensoren im Umfeld von Transportsystemen sind z.B. Lichtschranken oder Bewegungsmelder) und beeinflusst in Abhängigkeit des Anlagenzustandes AZ1 und der Steuerungsparameter SP1 Aktuatoren AKZ (z.B. Stellglieder). Der zentrale Materialflussrechners MR1 hat Zugriff auf die Anlagenzustandsdaten AZ1 der Anlagenkomponenten und steuert eine Steuerungskomponente SK1 der Anlage über den Zugriff und Beeinflussung von deren Steuerungsparameter SP1 in Abhängigkeit eines bereitgestellten Einlastplanes EP1. Die Kommunikationsinfrastruktur ist in FIG 1 durch Pfeile dargestellt.

Ein Nachteil des Einsatzes eines zentralen Materialflussrechners MR1 für die Steuerung eines Materialflusssystems liegt darin, dass alle zentralen Steuerungs- und Verwaltungsfunktionen (z.B. Durchführung von Anlagensimulationen, Datenhaltung, Kommunikation mit einer Leitwarte) im zentralen Materialflussrechner MR1 gebündelt sind. Wenn der zentrale Materialflussrechner MR1 ausfällt, kann sich die Anlage veränderten Lastsituationen nicht mehr anpassen, im ungünstigsten Fall steht die gesamte Anlage still. Um eine hohe Ausfallsicherheit zu gewährleisten, muss ein zusätzlicher Rechner als "standby" zur Verfügung stehen. Dies verursacht zusätzliche Kosten und kann auch oft eine gewisse Ausfallzeit nicht verhindern, da bei einem Systemausfall, die Anlagenkomponenten erst initialisiert werden müssen und der Standby-Rechner (Reserverechner) eine Anlaufzeit benötigt, um die Anlage wieder in Gang zu bringen.

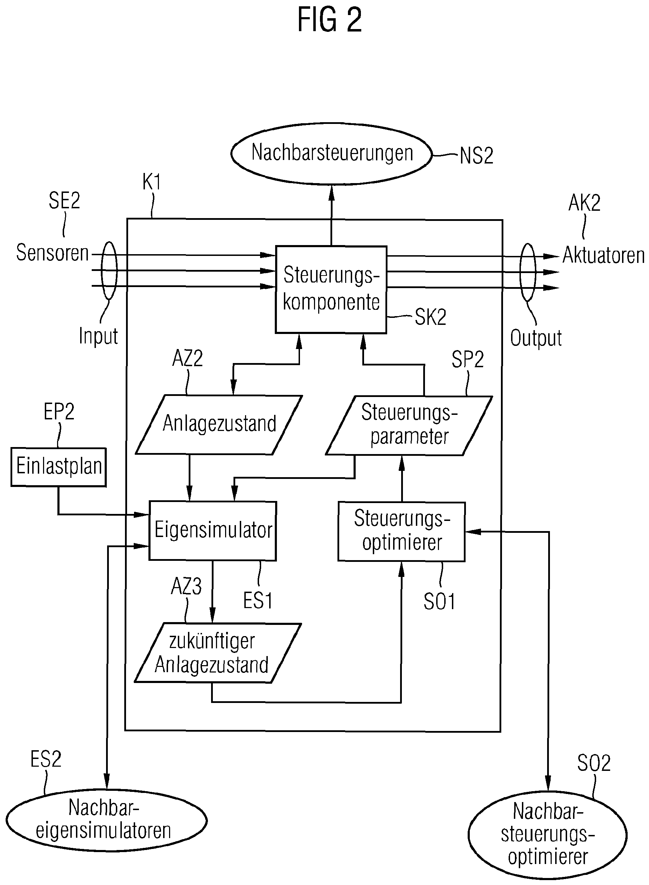

FIG 2 zeigt eine beispielhafte Architektur für den Einsatz von dezentralen Steuerungskomponenten SK2 unter Verwendung von Eigensimulatoren ES1 zur Steuerung und zur Anlagensimulation (zur Prognose von Belegungszuständen und Vorhersage von Staus und Engpässen und Schieflasten). Im Unterschied zur Architektur eines klassischen Steuerungsrechners (MR1, FIG 1) verfügt dieser über eine Komponente Eigensimulator ES1, welche Zugriff hat auf den Anlagenzustand AZ2 und die Steuerungsparameter SP2 des Moduls (Komponente). Darüber hinaus kann der Eigensimulator ES1 mit den entsprechenden Komponenten der Nachbarmodule ES2 mittels einer Kommunikationsinfrastruktur Daten austauschen. Die Kommunikationsinfrastruktur zur Steuerung eines Materialflusssystems kann verdrahtet (z.B. LAN, Ethernet, Busverbindungen), drahtlos (wireless, z.B. WLAN, Funk, Bluetooth) oder in einer Mischform zwischen verdrahtet und wireless realisiert sein. Die Kommunikationsinfrastruktur ist in FIG 2 durch Pfeile dargestellt. Die in FIG 2 dargestellte Komponente (Modul) K1 zum Einsatz in einem Materialflusssystem umfasst eine dezentrale Steuerungskomponente SK2, die mit Nachbarsteuerungen NS2 verbunden ist und über Sensoren SE2 (z.B. Lichtschranke zur Meldung des Eintreffens eines Transportgutes) aus der physikalischen Infrastruktur (Weichen, Förderbänder, Transportbehälter etc.) Input erhält. Die Steuerungskomponente SK2 kann z.B. als Speicherprogrammierbare Steuerung (SPS) ausgebildet sein, die in Abhängigkeit des Anlagenzustandes AZ2, der Steuerungsparameter SP2 und des Inputs der Sensoren SE2 für Aktuatoren AK2 (z.B. Stellglieder, Antriebe) einen Output liefert.

Der Eigensimulator ES1 bestimmt aus den Daten der Nachbarsimulatoren ES2, aus dem Einlastplan EP2 und dem aktuellen Anlagenzustand AZ2 durch Simulation den zukünftigen Anlagenzustand AZ3 (bzw. die Anlagenzustände zu verschiedenen Zeitpunkten in der Zukunft). Eine Komponente Steuerungsoptimierer SO1 passt auf Grundlage der prognostizierten zukünftigen Anlagenzustände die Steuerungsparameter SP2 entsprechend automatisch an. Der Steuerungsoptimierer SO1 kann mit einem Nachbarsteuerungsoptimierer SO2 einer Nachbarkomponente (Nachbarmodul) verbunden sein und Steuerungsparameter der Nachbarkomponente abfragen und/oder direkt beeinflussen. Dadurch wird eine weitere Optimierung und Effizienz im Anlagenbetrieb erreicht.

Die Informationsbasis für die Eigensimulation setzt sich somit aus zwei Teilen zusammen. Zum einen aus den notwendigen Daten für die Eigensimulation und zum zweiten aus den Daten, die für die Steuerung des Materialflusssystems generiert werden. Mit Blick auf die notwendige Kommunikation zwischen den Modulen der Anlage, ist eine möglichst große Schnittmenge beider Datenarten zu erreichen. Allgemein lässt sich die Informationsbasis beschreiben als Funktion

$$\mathscr{I}(m,\ t) := \mathscr{I}_e(m,\ t)\ \cup\ \mathscr{I}_s(m,\ t)$$

die vom Modul $m$ und der Zeit $t$ abhängt. $\mathscr{I}_e(\bullet,\bullet)$ ist der Anteil der Informationsbasis für die Eigensimulation und $\mathscr{I}_s(\bullet,\bullet)$ der Anteil für die Steuerung.

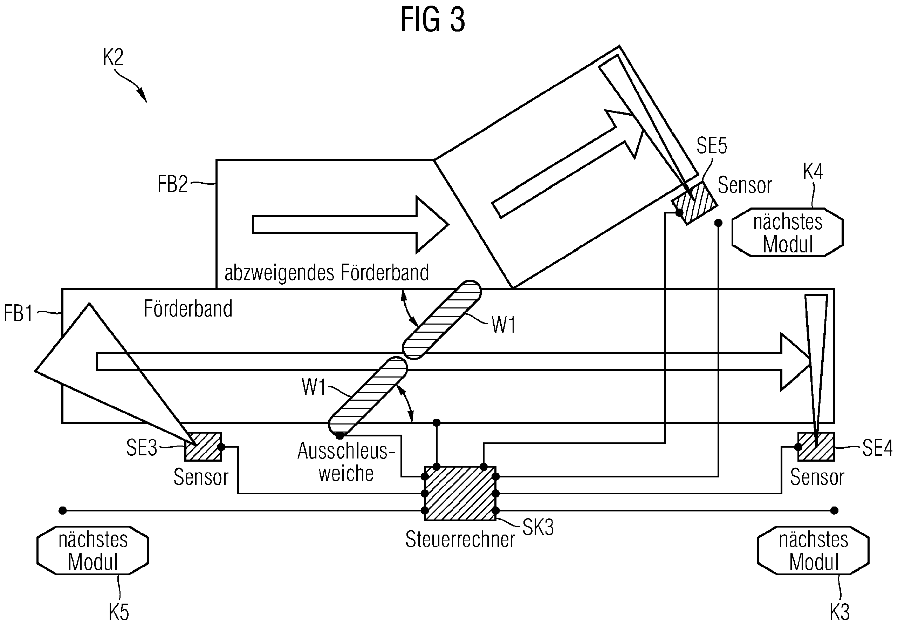

FIG 3 zeigt den schematischen Aufbau einer erfindungsgemäßen Komponente K2 am Beispiel einer Weiche. Eine Komponente (Modul) K2 - K5 besteht aus der Mechanik der Fördertechnik FB1, FB2, der Mechanik zum Ausschleusen W1, der Sensorik SE3,SE4 (z.B. Lichtschranken, Melder) und Aktorik (z.B. Antriebe, Stellglieder), der Steuerung SK3, sowie Kommunikationsschnittstellen zu den benachbarten Modulen K3-K5. Beispiele für Module sind Förderbänder, Weichen oder Zusammenführungen. Module/Komponenten, im Sinne der Erfindung, können auch komplexerer Art sein als die schon aufgeführten Beispiele. Z.B. kann eine Zusammenführung einschließlich der zuführenden Förderbänder zu einem Modul zusammengefasst werden. Die Modulbildung beruht auf Entscheidungen im Anlagenengineering und kann durch den Technologen oder den Automatisierer erfolgen.

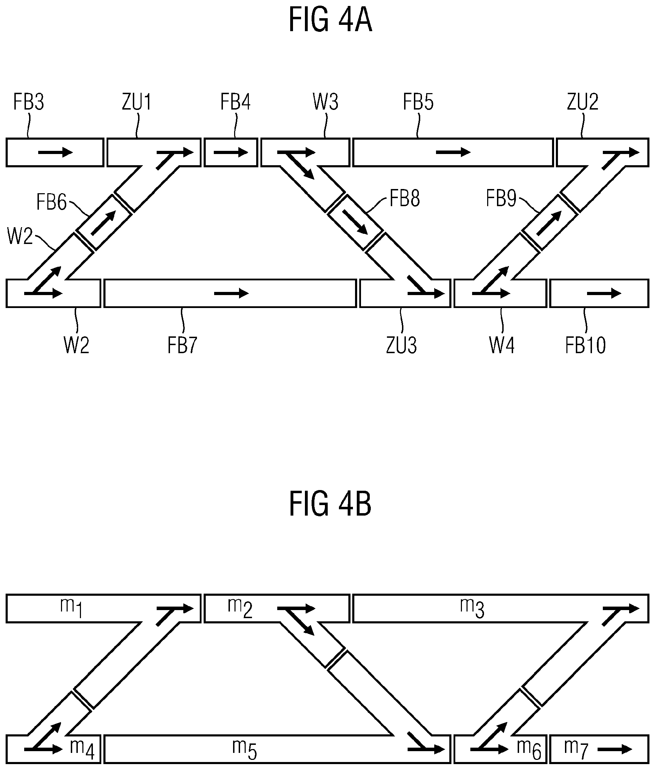

FIG 4 zeigt in einem schematischen Übersichtsdiagramm den Unterschied zwischen dem mechatronischen Aufbau einer Anlage und deren Abbildung in erfindungsgemäße Module bzw. Komponenten. Teilbild (a) im oberen Teil von FIG 4 zeigt den mechatronischen Aufbau einer Anlage mit Förderstrecken FB3 - FB10, Weichen W2 - W4 und Zusammenführungselementen ZU1 - ZU3. Teilbild (b) im unteren Teil von FIG 4 zeigt die Abbildung des mechatronischen Aufbaus in die erfindungsgemäßen Module (Komponenten) m1 bis m7.

Zur beispielhaften Erläuterung sind in FIG 4 dem Modul m5 die Förderstrecken FB7 und FB8 sowie die Zusammenführung ZU3 zugeordnet. Der genaue Zuschnitt von Modulen (Komponenten) m1 - m7 in dezentralen Materialflusssystemen ist eine Designentscheidung des Technologen bzw. des Anlagenautomatisierers. Diese Designentscheidung ist abhängig von der vorhandenen Infrastruktur und den Anforderungen an die Anlage. Ein Modul m1 - m7 ist eine Entität, welche im dezentralen System als abgeschlossene Einheit betrachtet wird und selbst über die Information seines Verhaltens verfügt. Innerhalb jedes Moduls m1 - m7 steht die vollständige Information zur Verfügung, um die künftige eigene Belegung zu simulieren, da die aktuelle Belegung und das eigene Verhalten bekannt sind. Darüber hinaus müssen zusätzlich Informationen über zukünftig zu befördernde Transporteinheiten von den Vorläufermodulen mitgeteilt werden, und genauso an Nachfolgemodule weitergegeben werden.

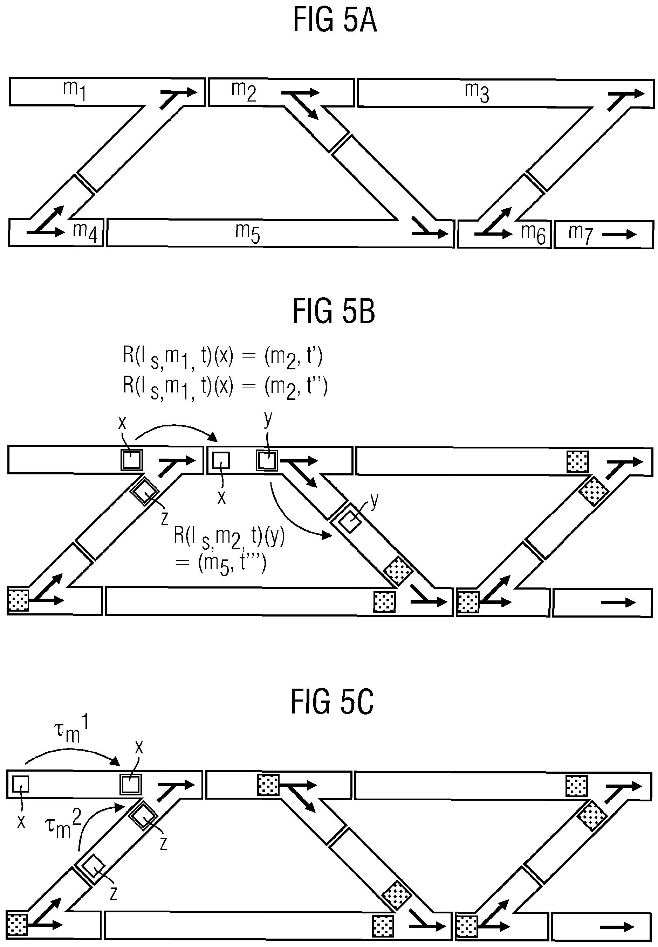

FIG 5 zeigt an einem ausgewählten Anlagenszenario den beispielhaften Einsatz der erfindungsgemäßen Eigensimulatoren.

Wie schon in FIG 2 erwähnt, lässt sich die Informationsbasis beschreiben als Funktion

$$\mathscr{I}(m,\ t) := \mathscr{I}_e(m,\ t)\ \cup\ \mathscr{I}_s(m,\ t)$$

die vom Modul $m$ und der Zeit $t$ abhängt. $\mathscr{I}_e(\bullet,\bullet)$ ist der Anteil der Informationsbasis für die Eigensimulation und $\mathscr{I}_s(\bullet,\bullet)$ der Anteil für die Steuerung.

Im Folgenden wird eine beispielhafte Simulation, basierend auf Eigensimulatoren der Module (Komponenten) beschrieben. Teilbild (a) im oberen Drittel von FIG 5 zeigt die Ausgangsbasis für das Beispiel, nämlich die Zuordnung des mechatronischen Anlagenaufbaus zu Modulen/Komponenten m1 - m7, wie in FIG 4 dargestellt. Für dieses Beispiel wird angenommen, dass die Informationsbasis für die Steuerung aus der Anzahl Transporteinheiten auf den Modulen in Abhängigkeit von der Zeit besteht. D.h., $\mathscr{I}_s(m,t)$ enthält die Anzahl Transporteinheiten auf dem gesamten Modul $m$ zur Zeit $t$. Im Falle einer Weiche seien es nur die Module bis zur Entscheidungsstelle (in FIG 5 grau hinterlegt im Modullayout dargestellt). Weiterhin seien für die Steuerung am Modul $m$ nur die Werte $\mathscr{I}_s(m',\bullet)$ von Interesse, für Module $m'$ welche von $m$ aus im Materialfluss erreichbar sind.

Die Steuerung legt für ein Modul das Verhalten in Abhängigkeit von der Informationsbasis fest. Allgemein kann man die Steuerung ebenfalls als Funktion

$$\mathscr{R}(\mathscr{I}_s,\ m,\ t)\colon x \rightarrow (m',\ t')$$

beschreiben, die einer Transporteinheit $x$, welche sich zur Zeit $t$ auf dem Entscheidungspunkt des Moduls $m$ befindet,

bei Informationsbasis $\mathcal{I}_s$ den Eintritt in das Nachfolgemodul $m$' zur Zeit $t$' zuordnet. Teilbild (b) in der Mitte von FIG 5 verdeutlicht diese Zuordnung. Die grau hinterlegten Flächen markieren die Entscheidungspunkte des jeweiligen Moduls. Befinden sich zwei Module gleichzeitig auf den Entscheidungspunkten des Moduls, wie die Transporteinheiten $x$ und $z$ in Teilbild (b), so kann die Funktion

$$\mathcal{R}(\mathcal{I}_s, m, t)(\bullet)$$

diese zeitlich entzerrt an das Nachfolgemodul weiterleiten. Wird im Beispiel, Teilbild (b), die Transporteinheit $x$ vor $z$ im Modul $m_1$ weitergeleitet, so gilt dann für die Eintrittszeitpunkte $t$' und $t$'' von $x$ bzw. $z$ in das Modul $m_2$: $t' < t''$. Das ist jedoch eine Designentscheidung für die Umsetzung der Eigensimulation. Die Funktionen $\mathcal{R}$ kann sowohl $x$ als auch $z$ den gleichen Zeitpunkt zuordnen,

$$\mathcal{R}(\mathcal{I}_s, m_2, t)(x) = \mathcal{R}(\mathcal{I}_s,$$

$$m_2, t)(z).$$

Die Eigensimulation muss dann entsprechend mit dieser Werten umgehen können.

Weiterhin enthält $\mathcal{I}(\bullet, \bullet)$ die für die Eigensimulation notwendigen Daten $\mathcal{I}_e(\bullet, \bullet)$. Nehmen wir für das Beispiel weiter an, dass im Rahmen der Eigensimulation jedem Modul die Ankunftszeit kommuniziert wird, wann eine Transporteinheit innerhalb der Simulation das Modul erreichen wird. Der Einfachheit halber wird angenommen, dass nach Erreichen eines Moduls $m$ eine Transporteinheit nach konstanter Zeit $\tau_m$ den Entscheidungspunkt des Moduls $m$ erreicht, d.h. es wird kein Warten durch Rückstau berücksichtigt. Dann verlässt eine Transporteinheit $x$, welche ein Modul $m$ zur Zeit $t$ betritt es zur Zeit $t$' und betritt Modul $m$', wobei

$$(t', m') = \mathcal{R}(\mathcal{I}_s, t+\tau_m)(x)$$

ist. Bei Modulen mit mehreren Eingängen kann die Transportzeit $\tau_m$ noch vom jeweiligen Eingang abhängig sein, siehe Teilbild (c) im unteren Drittel von FIG 5. Somit ist der vollständige Durchlauf der Transporteinheit $x$ durch das Modul $m$ beschrieben. Die Informationsbasis $\mathcal{I}_e(\bullet, \bullet)$ zur Eigensimulation muss für das Beispiel neben den Werten aus $\mathcal{I}_s(\bullet, \bullet)$ nur noch die Transporteinheiten enthalten, welche ein Modul $m$ zur Zeit $t$ erreichen.

Im Fall unseres Beispiels sind von der Informationsbasis $\mathcal{I}(\bullet, \bullet)$ für ein Modul $m$, sowohl für die Steuerung als auch die Eigensimulation, nur Werte für Module $m$'von Interesse, welche von Modul $m$ aus im Materialfluss erreicht werden können. D.h., für die Bereitstellung der Informationsbasis in allen Modulen genügt es, wenn jedes Modul an seine Vorgänger die Daten von seinen Nachfolgern sowie seine eigenen weiterkommuniziert. Dabei ist mit einfachen Standardmethoden, das Entstehen endloser Datenzyklen zu vermeiden.

Die Simulation der Module (Komponenten) wird zyklisch synchron für alle Module gleichzeitig angestoßen. Ein solcher Zyklus kann nach einem festen Zeitraster angestoßen werden, z.B. alle 30s zur vollen und zur halben Minute. Mittels eines geeigneten Protokolls muss sicher gestellt werden, dass alle Module sich auf eine gemeinsame Zeit synchronisieren und den gleichen Zeitplan für die Zyklusstartzeiten verwenden. Ein Beispiel für ein solches Protokoll ist das Internet-Protokoll ntp.

Zu Beginn des Zyklus initialisieren sich alle Eigensimulatoren mit den gerade im Modul befindlichen Transporteinheiten am aktuellen Aufenthaltsort. Falls ein Plan über die zu erwartenden Transporteinheiten besteht, können diese an den entsprechenden Modulen, wo sie eingelastet werden sollen, mit ihrem erwarteten Bereitstellungszeitpunkt berücksichtigt werden. Auf Grundlage der letzten Informationsbasis $\mathcal{I}(\bullet, \bullet)$ werden die Übergabezeitpunkte an die Nachfolgemodule für die auf dem Modul befindlichen Transporteinheiten bestimmt und an die entsprechenden Module kommuniziert. Für die per Eigensimulation virtuell eintreffenden Transporteinheiten wird analog verfahren. Transporteinheiten deren Eintrittszeitpunkt hinter dem zu simulierenden Zeithorizont liegt, werden verworfen. Ist die Eigensimulation abgeschlossen, so werden die Daten der gerade neu bestimmten Informationsbasis $\mathcal{I}(\bullet, \bullet)$ in der Anlage kommuniziert und ein Zyklus ist abgeschlossen. Es können mehrer Zyklen zusammengeschlossen werden, bevor die neu entstandene

Informationsbasis $\mathcal{I}(\bullet, \bullet)$ an den Steuerungsoptimierer der Module übergeben wird.

Die Simulation kann für die Module (Komponenten) aber auch asynchron aktiviert werden. Ein Modul speichert zu diesem Zweck die virtuell durch die Eigensimulatoren der benachbarten Module eintreffenden Transporteinheiten. Das Modul vermerkt die erwartete Ankunftszeit sowie die weiteren Eigenschaften der virtuell eintreffenden Transporteinheiten.

Bei einer asynchronen Aktivierung sind die Läufe der Eigensimulatoren von verschiedenen Modulen nicht notwendig koordiniert. Ein Lauf einer Eigensimulation eines Moduls ist damit unabhängig von den benachbarten Modulen: Wird die Simulation für ein Modul gestartet, so initialisiert sich der Eigensimulator zunächst mit den gerade im Modul befindlichen Transporteinheiten am aktuellen Aufenthaltsort. Weiterhin initialisiert sich der Eigensimulator mit den vom Modul gespeicherten virtuell eingetroffenen Transporteinheiten. Liegt für das Modul ein Plan von an diesem Modul einzulastenden Transporteinheiten vor, so werden auch diese vom Eigensimulator mit ihrem Bereitstellungszeitpunkt berücksichtigt. Auf Grundlage der letzten Informationsbasis werden die Übergabezeitpunkte an die Nachfolgemodule für alle diese Transporteinheiten bestimmt und an die entsprechenden Module kommuniziert. Die Nachfolgemodule speichern die Werte dieser virtuell eingetroffenen Transporteinheiten für die spätere Verwendung in ihrer eigenen Eigensimulation. Damit ist die Simulation für das betrachtete Modul beendet und die Informationsbasis $\mathcal{I}(\bullet, \bullet)$ wird aktualisiert. Nach ein oder mehreren Eigensimulationen wird die neue Informationsbasis $\mathcal{I}(\bullet, \bullet)$ an die Steuerung des Moduls übergeben.

Das beschriebene Verfahren konvergiert aus folgendem Grund: Der betrachtete Zeithorizont ist endlich, z.B. die maximale erlaubte Durchlaufzeit einer Transporteinheit durch die Anlage. Jedes Modul $m$ erzeugt für eine empfangene Nachricht über ein zum Zeitpunkt $t$ zu transportierendes Gut höchstens eine Nachricht, die frühestens den Zeitpunkt $t + \tau_m (= t_1 + \text{Durchlaufzeit})$ betrifft und an ein Nachfolgemodul geht, sowie bei Bedarf eine Nachricht über den konkreten Abnahmezeitpunkt an das Ursprungsmodul der empfangenen Nachricht. D.h., nach endlich vielen Nachrichten ist der Zeithorizont erreicht und es werden keine neuen Nachrichten mehr versendet. Dann steht in jedem Modul eine Prognose über die verschiedenen Lastzustände bis zum Zeithorizont zur Verfügung.

Zur Sicherstellung der Effizienz des Verfahrens ist die Abstimmung zwischen den durch Eigensimulation zu ermittelnden Daten, und den für einen optimalen Betrieb der Anlage notwendigen Daten erforderlich. Die für den optimalen Betrieb der Anlage notwendigen Daten ergeben sich aus der in der eingesetzten Steuerung verwendeten Informationsbasis; die durch die Eigensimulation erzeugten Daten brauchen in ihrer Qualität nicht die von der Steuerung erforderte Qualität zu übertreffen sofern das nicht für die Informationsbasis $\mathcal{I}_e$ der Eigensimulation notwendig ist. Der anfallende Justierungsaufwand ist nicht von der konkreten Anlage und möglichen Einlastszenarien abhängig. Dieser Aufwand fällt nur bei der Entwicklung des entsprechenden generellen Anlagetyps an und ist somit einmalig.

Die Nachteile heutiger Materialflusssysteme mit zentralem Materialflussrechner (MFR1; FIG 1), nämlich ein zentraler Kommunikationsengpass, ein Single-Point-of-Failure sowie uneinheitliche Grenzen von Mechatronik, Steuerung und Materialflussoptimierung werden vermieden. Die Vorteile der dezentralen, autonomen Module bleiben erhalten, nämlich weitgehende Selbstkonfiguration, reduzierter Engineeringaufwand, schnellere Inbetriebsetzung usw. Dabei kann trotzdem eine hochwertige Prognose über zukünftige Lastzustände des Systems erstellt werden als Basis für proaktive Materialflussstrategien, die qualitativ sonst nur beim Einsatz eines zentralen Materialflussrechners möglich sind.

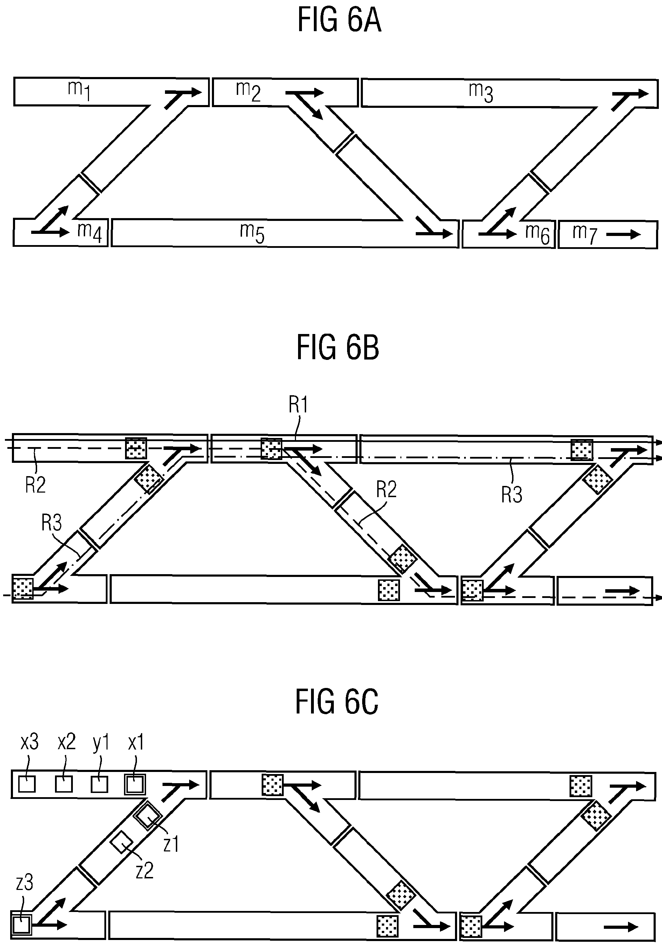

FIG 6 zeigt eine Spezialisierung und Fortführung des Beispiels von FIG 5. Als Beispielanlage wird der in FIG 4 Teilbild (a) schematisch dargestellte Ausschnitt einer Anlage verwendet. Die Anlage besteht aus 8 Förderbändern, 3 Weichen und 3 Zusammenführungen. Die Anlage wird in 7 Module aufgeteilt, ein Förderband ($m_7$), drei Weichen ($m_2$, $m_4$, $m_6$) und drei Zusammenführungen ($m_1$, $m_3$, $m_5$) (siehe FIG 4 Teilbild (b), FIG 5 Teilbild (a) und FIG 6 Teilbild (a)). Alle Förderelemente sollen die gleiche Geschwindigkeit haben und an einem Eingang eine Transporteinheit je 2 Zeiteinheiten aufnehmen können.

Die Informationsbasis $\mathcal{I}_s(\bullet, \bullet)$ für die Steuerung der Anlage bestehe aus der Anzahl Transporteinheiten auf den Modulen in Abhängigkeit von der Zeit, d.h., $\mathcal{I}_s(m, t)$ ist die Anzahl Transporteinheiten auf dem Modul $m$ zur Zeit $t$. Im Falle einer Weiche seien es nur die Module bis zur Entscheidungsstelle (grau hinterlegt im Modullayout). Weiterhin seien für die Steuerung am Modul $m$ nur die Werte $\mathcal{I}_s(m', \bullet)$ von Interesse, für Module $m'$ welche von $m$ aus im Materialfluss erreichbar sind.

In die Beispielanlage sollen drei Arten von Transporteinheiten eingelastet werden, die sich in der jeweiligen Start/Ziel-Kombination unterscheiden: die Typen x, y und z. Die Typen x und y gelangen über das Modul $m_1$ in die Anlage und der Typ z über das Modul $m_4$. Verlassen sollten die Typen x und z die Anlage über Modul $m_3$ und Typ y über Modul $m_7$. In Teilbild (b) von FIG 6 sind die aktuellen von der Steuerung verwendeten Routen R1-R3 für die drei Typen von Transporteinheiten dargestellt:

| R1 (durchgehend) | R2 (gestrichelt) | R3 (Strich-Punkt) |
|---|---|---|
| $x$ | $y$ | $z$ |

Die Anlage sei zum Zeitpunkt $t$ = 10 in der Situation von Abbildung 6 (c) und die Steuerung verwende immer noch die Routen von Abbildung 6 (b). Weiterhin sei die Transportzeit $\tau_m$ für die Module $m_1$ und $m_2$ bzw. $m_4$ gleich 6 bzw. 0 Zeiteinheiten und die Transportzeit vom Entscheidungspunkt zum Eingang des Nachfolgemoduls für alle Module 2 Zeiteinheiten. Die am Modul $m_1$ gezeigte Folge von x3 bis x1 sei die dichtest mögliche, d.h., Module $m_1$ und $m_2$ können maximal 4 Transporteinheiten bis einschließlich zum Entscheidungspunkt aufnehmen. Die Transportgeschwindigkeit ist so, dass nach verlassen des Entscheidungspunkts die nächste Transporteinheit frühestens 2 Zeiteinheiten später eintrifft.

Dann bekommt das Modul $m_2$ folgende Informationen über die Ankunft von Transporteinheiten:

| Transporteinheit | $x_1$ | $z_1$ | $y_1$ | $z_2$ | $x_2$ | $x_3$ | $z_3$ |
|---|---|---|---|---|---|---|---|
| Zeitpunkt | 12 | 13 | 14 | 16 | 18 | 20 | 21 |

Da das Modul $m_2$ die virtuell eintreffenden Transporteinheiten aufnimmt, ergibt sich folgende Informationsbasis $\mathscr{I}_s(m_2, \bullet)$. Gezählt werden die Transporteinheiten vom Eingang bis einschließlich dem Entscheidungspunkt, welchen eine Transporteinheit nach 6 Zeiteinheiten erreicht.

| $t$ | 10 | 11 | 12 | 13 | 14 | 15 | 16 | 17 | 18 | 19 | 20 | 21 |
|---|---|---|---|---|---|---|---|---|---|---|---|---|
| $\mathscr{I}_s(m_2, t)$ | 0 | 0 | 1 | 2 | 3 | 3 | 4 | 4 | 5 | 4 | 5 | 5 |

Simuliert sich die Beispielanlage nur 11 Zeiteinheiten in die Zukunft, so stellt sich an Modul $m_2$ eine Überlast ein, da in diesen 11 Zeiteinheiten das Modul $m_2$ 7 Transporteinheiten aufnehmen müsste. Die Maximale Aufnahmekapazität für diese Zeitspanne ist jedoch nur 5 Transporteinheiten. In der Informationsbasis erkennt man, dass zu den Zeitpunkten 18, 20 und 21 sich 5 Transporteinheiten auf der Strecke bis zum Entscheidungspunkt von Modul $m_2$ befinden müssten. Das Modul bietet für maximal 4 Transporteinheiten Platz.

Ist der Zyklus abgeschlossen, z.B. weil der Zeithorizont nur 11 Zeiteinheiten beträgt, so werden die gewonnen Daten der Informationsbasis in der Anlage kommuniziert. Im speziellen Fall von Modul $m_2$ werden seine eigenen Daten, d.h. die obige Tabelle mit den Werten von $\mathscr{I}_s(m_2, \bullet)$, an die Module $m_3$ und $m_5$ mitgeteilt. Weiterhin muss $m_2$ die von den Modulen $m_3$ und $m_5$ erhaltenen Daten $\mathscr{I}_s(\bullet, \bullet)$ zu $m_1$ und $m_4$ weiterreichen. Werden in der Steuerung diese genauen Daten nicht benötigt so kann dass Kommunikationsvolumen reduziert werden. Ist für die Steuerung z.B. nur die Information von Relevanz, ob ein Modul zu mehr oder weniger als 50% ausgelastet ist, so genügt es, die Zeitspannen 10 - 13 mit maximal 50% Auslastung und 14 - 21 mit mehr als 50% Auslastung zu kommunizieren.

Die Steuerung hätte jetzt die Möglichkeit, die Transporteinheiten vom Typ z über die Route $m_4$ - $m_5$ - $m_6$ - $m_3$ statt $m_4$ - $m_2$ - $m_3$ zu lenkten und dadurch Modul $m_2$ zu entlasten. Da sich nur noch Transporteinheit $z_3$ vor der letzten Weiche befindet und umgeleitet werden könnte, würden sich in der dann folgenden Eigensimulation die Werte von $\mathscr{I}_s(m_2, t)$ für $t$ = 20, 21 von 5 auf 4 reduzieren.

Das beschriebene Verfahren ist auch für Anlagen mit einer zentralen Steuerung nutzbringend einsetzbar. In diesem Fall ermöglicht das Verfahren eine Softwarearchitektur, in der die Systemgrenzen der Softwarebausteine und die Grenzen der Mechatronik zusammenfallen. Dadurch kann die reale Anlage in der Softwarelandschaft der (zentralen) Steuerung im Prinzip spiegelbildlich abgebildet werden. Viele Vorteile, wie eine einfachere Inbetriebnahme mit weitgehender Selbstkonfiguration der Steuerung an Hand der vorgegebenen Topologie sowie ein reduzierter Engineeringaufwand lassen sich so von dezentral auf zentral gesteuerte Anlagen übertragen.

Komponente eines Materialflusssystems zur Beförderung von Gütern, umfassend eine Mechatronik mit Förderelementen, Sensoren und Aktoren zum Transport der Güter, eine Steuerung zur Ansteuerung der Mechatronik, Schnittstellen zu Nachbarkomponenten und zur Umgebung, einen Eigensimulator zur Bestimmung des komponentenspezifischen zukünftigen Zustandes, wobei der Eigensimulator mit Eigensimulatoren weiterer Komponenten des Materialflusssystems zusammenwirkt, zur Bestimmung einer Prognose des zukünftigen Anlagenzustandes des Materialflusssystems. Die dezentralen Eigensimulatoren können synchron oder asynchron aktiviert werden.

Bezugszeichen

| MR1 | Zentraler Materialflussrechner |
|---|---|
| NS1 - NS2 | Nachbarsteuerung |
| SK1 - SK3 | Steuerungskomponente |
| SE1 - SE5 | Sensor |
| AK1 - AK2 | Aktuator |
| AZ1 - AZ3 | Anlagenzustand |
| EP1 - EP2 | Einlastplan |
| SP1 - SP2 | Steuerungsparameter |
| SO1 - SO2 | Steuerungsoptimierer |
| ES1 - ES2 | Eigensimulator |
| K1-K5, m1-m7 | Komponente/Modul |
| FB1 - FB10 | Förderband |
| W1 - W4 | Weiche |
| ZU1 - ZU3 | Zusammenführung |
| x, x1 - x3 | Transporteinheit |
| y, y1 | Transporteinheit |
| z, z1 - z3 | Transporteinheit |
| R1 - R3 | Route |

**Patentansprüche**

1. Ein Materialflusssystem zur Beförderung von Transportgütern, umfassend Komponenten (K1 - K5, m1 - m7) zur Durchführung einer Transportaufgabe, wobei eine Komponente (K1 - K5, m1 - m7) umfasst:

   a) ein Mechanikelement (FB1 - FB10, W1 - W4, ZU1 - ZU3) zur Förderung der Transportgüter (x, x1 - x3, y, y1, z, z1 - z3);
   b) eine Sensorik (SE1 - SE5) zum Erfassen von Zuständen des Mechanikelementes (FB1 - FB10, W1 - W4, ZU1 - ZU3) und/oder des Transportgutes (x, x1 - x3, y, y1, z, z1 - z3) und/oder der Umgebung;
   c) eine Aktorik (AK1, AK2) zur mechanischen Beeinflussung des Mechanikelementes (FB1 - FB10, W1 - W4, ZU1 - ZU3) und/oder des Transportgutes (x, x1 - x3, y, y1, z, z1 - z3);
   d) eine Steuerungskomponente (SK1 - SK3) zur Ansteuerung des Mechanikelements (FB1 - FB10, W1 - W4, ZU1 - ZU3) und der Aktorik (AK1, AK2), basierend auf den von der Sensorik (SE1 - SE5) gelieferten Daten, auf aktuellen Anlagenzustandsdaten (AZ1 - AZ3) des Materialflusssystems und auf Steuerungsparametern der Steuerungskomponente (SK1 - SK3);
   e) Schnittstellen zu Nachbarkomponenten (K1 - K5, m1 - m7) und zur Umgebung,
   **dadurch gekennzeichnet, dass**
   f) die Komponente (K1 - K5, m1 - m7) weiterhin einen in die Komponente integrierten, dedizierten Eigensimulator (ES1) umfasst, wobei der Eigensimulator (ES1) aus den Daten von Nachbarsimulatoren (ES2), aus einem Einlastplan (EP2) und einem aktuellen Anlagenzustand (AZ2) durch Simulation einen zukünftigen Anlagenzustand (AZ3) ermittelt.

2. Das Materialflusssystem nach Anspruch 1,
   **dadurch gekennzeichnet, dass** der Eigensimulator basierend auf den aktuellen Anlagenzustandsdaten des Materialflusssystems und der Steuerungsparameter der Steuerungskomponente durch Simulation eine Prognose für den komponentenspezifischen zukünftigen Zustand bestimmt.

3. Das Materialflusssystem nach einem der vorstehenden Ansprüche,
   **dadurch gekennzeichnet, dass**
   der Eigensimulator (ES1, ES2) über die Schnittstellen auf Daten von Nachbarkomponenten zugreifen kann und diese Daten zur Simulation verwendet.

**4.** Das Materialflusssystem nach einem der vorstehenden Ansprüche, weiter umfassend:
einen Steuerungsoptimierer (SO1, SO2), der basierend auf den durch den Eigensimulator (ES1, ES2) prognostizierten komponentenspezifischen zukünftigen Zustandsdaten, die Steuerungsparameter entsprechend optimiert.

**5.** Das Materialflusssystem nach einem der vorstehenden Ansprüche,
**dadurch gekennzeichnet, dass**
die Eigensimulatoren (ES1, ES2) zyklisch synchron für alle Komponenten (K1 - K5, m1 - m7) aktiviert werden.

**6.** Das Materialflusssystem nach einem der vorstehenden Ansprüche,
**dadurch gekennzeichnet, dass**
die Eigensimulatoren (ES1, ES2) asynchron aktiviert werden.

**7.** Das Materialflusssystem nach einem der vorstehenden Ansprüche,
**dadurch gekennzeichnet, dass**
durch die Eigensimulatoren (ES1, ES2) Schieflasten oder Stauungen im Materialflusssystem erkannt werden.

**8.** Das Materialflusssystem nach einem der Ansprüche 4 bis 7,
**dadurch gekennzeichnet, dass**
durch den Steuerungsoptimierer (SO1, SO2) Schieflasten oder Stauungen im Materialflusssystem vermieden werden.

**9.** Das Materialflusssystem nach einem der vorstehenden Ansprüche,
**dadurch gekennzeichnet, dass**
der Eigensimulator (ES1, ES2) Zugriff auf einen Einlastplan (EP1, EP2) des Materialflusssystems hat.

**10.** Eine Komponente (K1 - K5, m1 - m7) eines Materialflusssystems zur Beförderung von Gütern, umfassend:

a) eine Mechatronik mit Förderelementen, Sensoren und Aktoren zum Transport der Güter;
b) eine Steuerung zur Ansteuerung der Mechatronik;
c) Schnittstellen zu Nachbarkomponenten (K1 - K5, m1 - m7) und zur Umgebung;
d) einen Eigensimulator (ES1, ES2) zur Bestimmung des komponentenspezifischen zukünftigen Zustandes,

**dadurch gekennzeichnet, dass**
der Eigensimulator (ES1) mit Eigensimulatoren (ES2) weiterer Komponenten des Materialflusssystems zusammenwirkt, zur Bestimmung des zukünftigen Anlagenzustandes des Materialflusssystems, wobei der Eigensimulator (ES1) aus den Daten von Nachbarsimulatoren (ES2), aus einem Einlastplan (EP2) und einem aktuellen Anlagenzustand (AZ2) durch Simulation einen zukünftigen Anlagenzustand (AZ3) ermittelt.

**11.** Die Komponente (K1 - K5, m1 - m7) nach Anspruch 10, weiter umfassend:
einen Steuerungsoptimierer (SO1, SO2), der basierend auf den durch den Eigensimulator (ES1, ES2) prognostizierten komponentenspezifischen zukünftigen Zustandsdaten, die Steuerungsparameter der Steuerung entsprechend anpasst.

**12.** Die Komponente (K1 - K5, m1 - m7) nach Anspruch 10 oder 11,
**dadurch gekennzeichnet, dass**
der Steuerungsoptimierer (SO1, SO2) Schieflasten oder Stauungen im Materialflusssystem vermeidet.

**13.** Die Komponente (K1 - K5, m1 - m7) nach einem der Ansprüche 10 bis 12,
**dadurch gekennzeichnet, dass**
der Eigensimulator (ES1, ES2) auf Anlagenzustandsdaten des Materialflusssystems Zugriff hat.

**14.** Die Komponente (K1 - K5, m1 - m7) nach einem der Ansprüche 10 bis 13,
**dadurch gekennzeichnet, dass**
sich die Komponente (K1 - K5, m1 - m7) mit den Nachbarkomponenten (K1 - K5, m1 - m7) über die Schnittstellen bekannt macht und entsprechend der Anzahl und Art der Nachbarkomponenten (K1 - K5, m1 - m7) den Eigensimulator (ES1, ES2) und den Steuerungsoptimierer (SO1, SO2) automatisch konfiguriert.

**Claims**

1. Material flow system for transporting goods, comprising components (K1-K5, m1-m7) for carrying out a transportation task, wherein a component (K1-K5, m1-m7) comprises:

    a) a mechanical element (FB1-FB10, W1-W4, ZU1-ZU3) for transporting the goods (x, x1-x3, y, y1, z, z1-z3);
    b) a sensory system (SE1-SE5) for detecting states of the mechanical element (FB1-FB10, W1-W4, ZU1-ZU3) and/or of the transported goods (x, x1-x3, y, y1, z, z1-z3) and/or of the surroundings;
    c) an actuator system (AK1, AK2) for mechanically influencing the mechanical element (FB1-FB10, W1-W4, ZU1-ZU3) and/or the transported goods (x, x1-x3, y, y1, z, z1-z3);
    d) a control component (SK1-SK3) for controlling the mechanical element (FB1-FB10, W1-W4, ZU1-ZU3) and the actuator system (AK1, AK2), based on the data supplied by the sensory system (SE1-SE5), to current installation state data (AZ1-AZ3) of the material flow system and to control parameters of the control component (SK1-SK3);
    e) interfaces with adjacent components (K1-K5, m1-m7) and with the surroundings,
    **characterised in that**
    f) the component (K1-K5, m1-m7) also comprises a dedicated internal simulator (ES1) integrated into the component, wherein the internal simulator (ES1) determines a future installation state (AZ3) from the data of adjacent simulators (ES2), from the loading plan (EP2) and a current installation state (AZ2) by simulation.

2. Material flow system according to claim 1,
    **characterised in that**
    the internal simulator determines a prediction of the future state of a particular component based on the current installation state data of the material flow system and the control parameters of the control component by simulation.

3. Material flow system according to one of the preceding claims,
    **characterised in that**
    the internal simulator (ES1, ES2) can access data from adjacent components via the interfaces and uses this data for simulation.

4. Material flow system according to one of the preceding claims, further comprising:
    a control optimiser (SO1, SO2) which, based on the future state data for a particular component as predicted by the internal simulator (ES1, ES2), optimises the control parameters accordingly.

5. Material flow system according to one of the preceding claims,
    **characterised in that**
    the internal simulators (ES1, ES2) are activated cyclically and synchronously for all the components (K1-K5, m1-m7).

6. Material flow system according to one of the preceding claims,
    **characterised in that** the internal simulators (ES1, ES2) are activated asynchronously.

7. Material flow system according to one of the preceding claims,
    **characterised in that** unbalanced loads or jams are recognised in the material flow system by means of the internal simulators (ES1, ES2).

8. Material flow system according to one of claims 4 to 7, **characterised in that** unbalanced loads or jams in the material flow system are prevented by means of the control optimiser (SO1, SO2).

9. Material flow system according to one of the preceding claims,
    **characterised in that**
    the internal simulator (ES1, ES2) has access to a loading plan (EP1, EP2) of the material flow system.

10. Component (K1-K5, m1-m7) of a material flow system for transporting goods, comprising:

    a) a mechatronics system with transport elements, sensors and actuators for the transport of the goods;
    b) a control device for controlling the mechatronics,
    c) interfaces with adjacent components (K1-K5, m1-m7) and with the surroundings,
    d) an internal simulator (ES1, ES2) for determining the future state of the particular component,

**characterised in that**
the internal simulator (ES1) cooperates with internal simulators (ES2) of other components of the material flow system, in order to determine the future installation state of the material flow system, wherein the internal simulator (ES1) determines a future installation state (AZ3) from the data of adjacent simulators (ES2), from a loading plan (EP2), and a current installation system (AS2) by simulation.

11. Component (K1-K5, m1-m7) according to claim 10, further comprising:
a control optimiser (SO1, SO2) which, based on the future state data for the particular component as predicted by the internal simulator (ES1, ES2), adapts the control parameters of the control device accordingly.

12. Component (K1-K5, m1-m7) according to claim 10 or 11,
**characterised in that**
the control optimiser (SO1, SO2) prevents unbalanced loads or jams in the material flow system.

13. Component (K1-K5, m1-m7) according to one of claims 10 to 12,
**characterised in that**
the internal simulator (ES1, ES2) has access to installation state data of the material flow system.

14. Component (K1-K5, m1-m7) according to one of claims 10 to 13,
**characterised in that**
the component (K1-K5, m1-m7) makes the presence thereof known to the adjacent components (K1-K5, m1-m7) via the interfaces and automatically configures the internal simulator (ES1, ES2) and the control optimiser (SO1, SO2) according to the number and type of adjacent components (K1-K5, m1-m7).

**Revendications**

1. Système de flux de matériel pour transporter des marchandises de transport, comprenant des composantes (K1 - K5, m1 - m7) pour exécuter une tâche de transport, dans lequel une composante (K1 - K5, m1 - m7) comprend :

a) un élément mécanique (FB1 - FB10, W1 - W4, ZU1 - ZU3) pour transporter les marchandises de transport (x, x1 - x3, y, y1, z, z1 - z3) ;
b) des capteurs (SE1 - SE5) pour détecter des états de l'élément mécanique (FB1 - FB10, W1 - W4, ZU1 - ZU3) et/ou de la marchandise de transport (x, x1 - x3, y, y1, z, z1 - z3) et/ou de l'environnement ;
c) des actionneurs (AK1, AK2) pour influencer mécaniquement l'élément mécanique (FB1 - FB10, W1 - W4, ZU1 - ZU3) et/ou la marchandise de transport (x, x1 - x3, y, y1, z, z1 - z3) ;
d) une composante de commande (SK1 - SK3) pour commander l'élément mécanique (FB1 - FB10, W1 - W4, ZU1 - ZU3) et les actionneurs (AK1, AK2) en se basant sur les données fournies par les capteurs (SE1 - SE5), sur des données d'état d'installation actuel (AZ1 - AZ3) du système de flux de matériel et sur des paramètres de commande de la composante de commande (SK1 - SK3) ;
e) des interfaces vers des composantes voisines (K1 - K5, m1 - m7) et vers l'environnement,
**caractérisé en ce que**
f) la composante (K1 - K5, m1 - m7) comprend en outre un simulateur propre (ES1) dédié intégré dans la composante, dans lequel le simulateur propre (ES1), à partir des données de simulateurs voisins (ES2), à partir d'un plan de charge entrante (EP2) et d'un état d'installation actuel (AZ2), calcule un état d'installation futur (AZ3) par simulation.

2. Système de flux de matériel selon la revendication 1, **caractérisé en ce que** le simulateur propre détermine un pronostic pour l'état futur spécifique aux composantes par simulation en se basant sur les données d'état d'installation actuel du système de flux de matériel et les paramètres de commande de la composante de commande.

3. Système de flux de matériel selon l'une des revendications précédentes,
**caractérisé en ce que** le simulateur propre (ES1, ES2) peut accéder à des données de composantes voisines par les interfaces et emploie ces données pour la simulation.

4. Système de flux de matériel selon l'une des revendications précédentes, comprenant en outre
un optimiseur de commande (SO1, SO2) qui, en se basant sur les données d'état futur spécifiques aux composantes pronostiquées par le simulateur propre (ES1, ES2), optimise les paramètres de commande de manière correspondante.

5. Système de flux de matériel selon l'une des revendications précédentes,
**caractérisé en ce que** les simulateurs propres (ES1, ES2) sont activés de manière synchrone et cyclique pour toutes les composantes (K1 - K5, m1 - m7).

6. Système de flux de matériel selon l'une des revendications précédentes,
**caractérisé en ce que** les simulateurs propres (ES1, ES2) sont activés de manière asynchrone.

7. Système de flux de matériel selon l'une des revendications précédentes,
**caractérisé en ce que** des charges déséquilibrées ou des encombrements dans le système de flux de matériel sont détectés par les simulateurs propres (ES1, ES2).

8. Système de flux de matériel selon l'une des revendications 4 à 7,
**caractérisé en ce que** des charges déséquilibrées ou des encombrements dans le système de flux de matériel sont évités par l'optimiseur de commande (SO1, SO2).

9. Système de flux de matériel selon l'une des revendications précédentes,
**caractérisé en ce que** le simulateur propre (ES1, ES2) peut accéder à un plan de charge entrante (EP1, EP2) du système de flux de matériel.

10. Composante (K1 - K5, m1 - m7) d'un système de flux de matériel pour transporter des marchandises, comprenant :

   a) une mécatronique avec des éléments de convoyage, des capteurs et des actionneurs pour le transport des marchandises ;
   b) une commande pour commander la mécatronique ;
   c) des interfaces vers des composantes voisines (K1 - K5, m1 - m7) et vers l'environnement ;
   d) un simulateur propre (ES1, ES2) pour déterminer l'état futur spécifique aux composantes,

   **caractérisé en ce que**
   le simulateur propre (ES1) coopère avec des simulateurs propres (ES2) d'autres composantes du système de flux de matériel pour déterminer l'état d'installation futur du système de flux de matériel, dans lequel le simulateur propre (ES1), à partir des données de simulateurs voisins (ES2), à partir d'un plan de charge entrante (EP2) et d'un état d'installation actuel (AZ2), calcule un état d'installation futur (AZ3) par simulation.

11. Composante (K1 - K5, m1 - m7) selon la revendication 10, comprenant en outre :
un optimiseur de commande (SO1, SO2) qui, en se basant sur les données d'état futur spécifiques aux composantes pronostiquées par le simulateur propre (ES1, ES2), adapte les paramètres de commande de la commande de manière correspondante.

12. Composante (K1 - K5, m1 - m7) selon la revendication 10 ou 11,
**caractérisée en ce que** l'optimiseur de commande (SO1, SO2) évite des charges déséquilibrées ou des encombrements dans le système de flux de matériel.

13. Composante (K1 - K5, m1 - m7) selon l'une des revendications 10 à 12, **caractérisée en ce que** le simulateur propre (ES1, ES2) peut accéder à des données d'état d'installation du système de flux de matériel.

14. Composante (K1 - K5, m1 - m7) selon l'une des revendications 10 à 13, **caractérisée en ce que** la composante (K1 - K5, m1 - m7) se fait connaître avec les composantes voisines (K1 - K5, m1 - m7) par les interfaces et en fonction du nombre et du type des composantes voisines (K1 - K5, m1 - m7), configure automatiquement le simulateur propre (ES1, ES2) et l'optimiseur de commande (SO1, SO2) en fonction du nombre et du type de composantes voisines (K1 - K5, m1 - m7).

# FIG 1

Nachbarsteuerungen —NS1

SE1

Sensoren

Input

AZ1

Anlagezustand

Steuerungskomponente

—SK1

SP1

Steuerungsparameter

AK1

Aktuatoren

Output

EP1

Einlastplan

zentraler
Materialflussrechner

—MR1

# FIG 2

# FIG 3

EP 2 417 500 B1

# FIG 4A

FB3  ZU1  FB4  W3  FB5  ZU2

FB6  FB8  FB9

W2

W2  FB7  ZU3  W4  FB10

# FIG 4B

$m_1$  $m_2$  $m_3$

$m_4$  $m_5$  $m_6$  $m_7$

## FIG 5A

## FIG 5B

$$R(l_{S}, m_1, t)(x) = (m_2, t')$$
$$R(l_{S}, m_1, t)(x) = (m_2, t'')$$

$$R(l_{S}, m_2, t)(y) = (m_5, t''')$$

## FIG 5C

$$\tau_m{}^1$$

$$\tau_m{}^2$$

## FIG 6A

## FIG 6B

## FIG 6C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070078531 A1
- WO 200613407 A2
- US 5625559 A

**In der Beschreibung aufgeführte Nicht-Patentliteratur**

- Dezentrale Automatisierungsstrategien für Gepäckbeförderungssysteme. **A. FAY ; I. FISCHER.** Automatisierungstechnik. Oldenbourg Verlag vor, 2004, vol. 52, 7
- Evaluation of Routing Strategies for Decentralized Self-Organization in Large Scale Conveyor Systems. **G. FOLLERT ; M. ROIDL.** Progress in Material Handling Research: 2008. Material Handling Institute, 2008, 160-184
- **FUJII S. et al.** Distributed Simulation Model For Computer Integrated Manufacturing. *Simulation eines CIM-Systems (Computer Integrated Manufacturing) offenbart*